# EUROPEAN PATENT APPLICATION

(11) **EP 1 680 960 A1**
(43) Date of publication of application: **19.07.2006**
(21) Application number: 05258101.4
(22) Date of filing: 29.12.2005
(51) Int. Cl.: A01P 21/00, A01N 27/00, A01N 57/20

(54) **Plant growth regulation**

(30) Priority: 14.01.2005 US 644348
(71) Applicant: Rohm and Haas Company, Philadelphia, PA 19106-2399 (US)
(72) Inventor: Basel, Richard M., Fostoria ohio 44830 (US); Kostansek, Edward Charles, Buckingham, Pennsylvania 18912 (US)
(74) Representative: Kent, Venetia Katherine

(57) **Abstract**

Provided is a method for treating a plant comprising contacting said plant with at least one composition (i) comprising at least one cyclopropene and contacting said non-citrus plant with at least one composition (ii) comprising at least one plant growth regulator that is not a cyclopropene. Further provided is a liquid composition suitable for treating plants comprising at least one cyclopropene, at least one plant growth regulator that is not a cyclopropene, and one or more further ingredients selected from the group consisting of metal complexing agents, surfactants, hydrocarbon oils, and alcohols.

## Description

### BACKGROUND:

Plants are often treated by contacting them with compositions in order to achieve a variety of useful results. For example, L. Pozo et. al. (Journ. Amer. Soc. Hort. Sci., vol. 129, no. 4, pp. 473-478, 2004) report that spray solutions containing an abscission agent and 1-methyl cyclopropene were applied to citrus trees, and the treated citrus trees showed low fruit detachment force and showed low levels of leaf abscission. However, treatments other than the specific combination of abscission agent with 1-methyl cyclopropene are desired. Further, treatments for non-citrus plants are desired. Additionally, treatments are desired that improve the crop yield, that improve the quality of the crop, or that improve both the quality of the crop and the crop yield.

### STATEMENT OF THE INVENTION:

In a first aspect of the present invention, there is provided a method for treating a non-citrus plant comprising contacting said non-citrus plant with at least one composition (i) comprising at least one cyclopropene and contacting said non-citrus plant with at least one composition (ii) comprising at least one plant growth regulator that is not a cyclopropene.

In a second aspect of the present invention, there is provided a liquid composition suitable for treating plants comprising at least one cyclopropene, at least one plant growth regulator that is not a cyclopropene, and one or more further ingredients selected from the group consisting of metal complexing agents, hydrocarbon oils, and alcohols.

In a third aspect of the present invention, there is provided a method for treating a plant comprising contacting said plant with at least one composition (i) comprising at least one cyclopropene and contacting said plant with at least one composition (iv) comprising at least one plant growth regulator that is not a cyclopropene and is not an abscission agent.

In a fourth aspect of the present invention, there is provided a liquid composition suitable for treating plants comprising at least one cyclopropene, at least one plant growth regulator that is not a cyclopropene and that is not an abscission agent, and one or more further ingredients selected from the group consisting of metal complexing agents, surfactants, hydrocarbon oils, and alcohols.

### DETAILED DESCRIPTION:

The practice of the present invention involves the use of one or more cyclopropenes. As used herein, "cyclopropene" means any compound with the formula 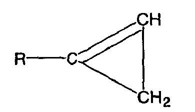 where R is hydrogen or a substituted or unsubstituted alkyl, alkenyl, alkynyl, cycloalkyl, cycloalkylalkyl, phenyl, or naphthyl group; wherein the substituents, when present, are independently halogen, alkoxy, or substituted or unsubstituted phenoxy. Any compound that is not a cyclopropene is known herein as a "non-cyclopropene" compound.

In some embodiments, R has no double bond. Independently, in some embodiments, R has no triple bond. Independently, in some embodiments, there is no halogen atom substituent on R. Independently, in some embodiments, R has no substituents that are ionic. Independently, in some embodiments, R is not capable of generating oxygen compounds.

In some embodiments of the invention, R is (C₁-C₁₀) alkyl. In some embodiments, R is (C₁-C₈) alkyl, or (C₁-C₄) alkyl, or methyl. When R is methyl, the cyclopropene is known herein as "1-MCP."

The cyclopropenes applicable to this invention may be prepared by any method. Some suitable methods of preparation of cyclopropenes are the processes disclosed in U.S. Patents No. 5,518,988 and 6,017,849.

Plants and plant parts are subject to various biological processes such as, for example, growth, ripening, senescence, maturation, abscission, and degradation. Altering biological processes in plants or plant parts by contacting them with one or more chemical compositions is known as plant growth regulation. Chemical compositions that cause plant growth regulation are known herein as "plant growth regulators." A plant growth regulator may alter a process either by enhancing it (such as, for example, speeding the process or increasing it); by inhibiting it (such as, for example, slowing the process or decreasing it); by initiating it; or by a combination thereof. The alteration of biological process or processes in plants or plant parts caused by one or more plant growth regulator is known herein as the "plant response."

The practice of the present invention involves the use of at least one plant growth regulator that is not a cyclopropene. Any compound that is effective as a plant growth regulator and is not a cyclopropene is suitable. Some examples of classes of suitable plant growth regulators that are not cyclopropenes are as follows:
(I) Ethylene, non-cyclopropene ethylene release agents, and non-cyclopropene compounds with high ethylene activity. Suitable ethylene release agents include, for example, 2-chloroethylphosphonic acid (ethephon), abscisic acid, and other non-cyclopropene compounds that act in a similar way to affect abscission. Suitable compounds with high ethylene activity include, for example, aliphatic hydrocarbons with or without one or more attached halogen atoms, such as, for example, alkyl or alkenyl compounds with 2 to 5 carbon atoms that may or may not have an attached halogen atom. Some examples of compounds with high ethylene activity are propylene, vinyl chloride, carbon monoxide, acetylene, 1-butene, and other non-cyclopropene compounds with high ethylene activity. Also suitable are non-cyclopropene compounds that are progenitors of compounds with high ethylene activity.
(II) Non-cyclopropene compounds that inhibit ethylene synthesis or ethylene receptor site action or both. Suitable examples include non-cyclopropene compounds that contain active metal ions (such as, for example, silver ions or other metal ions). Further suitable examples include rare amino acids that inhibit ethylene synthesis such as, for example, aminoethoxyvinylglycine and aminooxyacetic acid.
(III) Non-cyclopropene compounds with cytokinin activity. Suitable examples include non-cyclopropene compounds with purine structure, such as, for example, benzyl adenine, kinetin, zeatin, adenine, dihydrozeatin, tetrahydropyranylbenzyladenine, dimethylallyladenine, methylthiozeatin, and ethoxyethyladenine. Further suitable examples include non-cyclopropene compounds without purine structure, such as, for example, benzylaminobenzimidazole, chlorophenylphenylurea, benzthiozolyoxyacetic acid, and fluorophenylbiuret compounds that elicit cytokinin response.
(IV) Non-cyclopropene auxins. Suitable examples include indoleacetic acid, indolepropionic acid, indolebutyric acid, naphthaleneacetic acid, beta-naphthoxyacetic acid, 4-chlorophenoxyacetic acid, 2,4-dichlorooxyacetic acid, trichlorophenoxyacetic acid, trichloro benzoic acid, and 4 amino 3,5,6 trichloropicolinic acid.
(V) Gibberellins. Suitable gibberellins include, for example, GA₂, GA₃, GA₄, GA₅, GA₇, and GA₈ having variously substituted giberellin backbone structures. Further suitable examples include non-cyclopropene compounds that show gibberellin-like activity, such as, for example, helminthosporic acid, phaseolic acid, kaurenoic acid, and steviol.
(VI) Cofactors and inhibitors of IAA oxidase. Suitable examples include non-cyclopropene phenolic inhibitors that are intermediates of phenylalanine or tyrosine pathways, including, for example, chlorogenic acid, coumaric acid, quercitin, caffeic acid, and other non-cyclopropene phenolic inhibitors.
(VII) Non-cyclopropene secondary growth inhibitors, including, for example, methyl jasmonate.
(VIII) Non-cyclopropene natural growth hormones. Suitable non-cyclopropene natural growth hormones include those derived from, for example, kelp, algae, and bacteria. In some embodiments that use non-cyclopropene natural growth hormones, the hormone is used in unpurified form.

In some embodiments, one or more composition of the present invention includes at least one ionic complexing reagent. An ionic complexing reagent interacts with a cyclopropene to form a complex that is stable in water. Some suitable ionic complexing reagents, for example, include lithium ion. In some embodiments, no ionic complexing reagent is used.

In some embodiments, no composition of the present invention includes any molecular encapsulating agent. In other embodiments, one or more composition of the present invention includes at least one molecular encapsulating agent.

When a molecular encapsulating agent is used, suitable molecular encapsulating agents include, for example, organic and inorganic molecular encapsulating agents. Suitable organic molecular encapsulating agents include, for example, substituted cyclodextrins, unsubstituted cyclodextrins, and crown ethers. Suitable inorganic molecular encapsulating agents include, for example, zeolites. Mixtures of suitable molecular encapsulating agents are also suitable. In some embodiments of the invention, the encapsulating agent is α-cyclodextrin ("α-CD"), β-cyclodextrin, γ-cyclodextrin, or a mixture thereof. In some embodiments of the invention, particularly when the cyclopropene is 1-methylcyclopropene, the encapsulating agent is α-cyclodextrin. The preferred encapsulating agent will vary depending upon the size of the R group. However, as one skilled in the art will appreciate, any cyclodextrin or mixture of cyclodextrins, cyclodextrin polymers, modified cyclodextrins, or mixtures thereof can also be utilized pursuant to the present invention. Cyclodextrins are available from Wacker Biochem Inc., Adrian, MI or Cerestar USA, Hammond, IN, as well as other vendors.

In some of the embodiments in which a molecular encapsulating agent is present, at least one molecular encapsulating agent encapsulates one or more cyclopropenes. A cyclopropene or substituted cyclopropene molecule encapsulated in a molecule of a molecular encapsulating agent is known herein as a "cyclopropene molecular encapsulating agent complex." The cyclopropene molecular encapsulation agent complexes can be prepared by any means. In one method of preparation, for example, such complexes are prepared by contacting the cyclopropene with a solution or slurry of the molecular encapsulation agent and then isolating the complex, using, for example, processes disclosed in U. S. Patent No. 6,017,849. For example, in one method of making a complex in which 1-MCP is encapsulated in a molecular encapsulating agent, the 1-MCP gas is bubbled through a solution of α-cyclodextrin in water, from which the complex first precipitates and is then isolated by filtration. In some embodiments, complexes are made by the above method and, after isolation, are dried and stored in solid form, for example as a powder, for later addition to useful compositions.

In some embodiments, one or more molecular encapsulating agent and one or more cyclopropenes are both present in a composition; in some of such embodiments, the amount of molecular encapsulating agent can usefully be characterized by the ratio of moles of molecular encapsulating agent to moles of cyclopropene. In some embodiments, the ratio of moles of molecular encapsulating agent to moles of cyclopropene is 0.1 or larger; or 0.2 or larger; or 0.5 or larger; or 0.9 or larger. Independently, in some of such embodiments, the ratio of moles of molecular encapsulating agent to moles of cyclopropene is 2 or lower; or 1.5 or lower.

The present invention involves the use of at least one composition (i) that contains at least one cyclopropene. It is contemplated that composition (i) may be a solid, liquid, gas, or combination thereof. In some embodiments, the only materials in composition (i) are one or more cyclopropenes. In some embodiments, composition (i) contains (in addition to at least one cyclopropene) at least one compound that is not a cyclopropene. In embodiments in which composition (i) contains two or more compounds, composition (i) may be a mixture, a solution, a dispersion (such as, for example, a suspension, an emulsion, a microemulsion, or a miniemulsion), or a combination thereof.

The present invention involves the use of at least one composition (ii) that contains at least one plant growth regulator that is not a cyclopropene. It is contemplated that composition (ii) may contain a solid, liquid, gas, or combination thereof. In some embodiments, the only materials in composition (ii) are one or more plant growth regulators that are not cyclopropenes. In some embodiments, composition (ii) contains (in addition to at least one compound that is a plant growth regulator that is not a cyclopropene) at least one compound that is not a plant growth regulator that is not a cyclopropene. In embodiments in which composition (ii) contains two or more compounds, composition (ii) may be a mixture, a solution, a dispersion (such as, for example, a suspension, an emulsion, a microemulsion, or a miniemulsion), or a combination thereof.

In some embodiments, at least one composition (ii) is used that has no abscission agent; such a composition (ii) is labeled herein as a composition (iv). In some embodiments, at least one composition (ii) is used that does contain at least one abscission agent. Further contemplated are embodiments in which more than one composition (ii) is used, possibly including at least one composition (iv) and at least one composition (ii) that does contain at least one abscission agent.

In some embodiments, at least one composition (iii) is used that is both a composition (i) and a composition (ii); that is, a composition (iii) is defined herein as a composition that contains both at least one cyclopropene and at least one plant growth regulator that is not a cyclopropene. Independently, in some embodiments, at least one composition (i) is used that contains no plant growth regulator that is not a cyclopropene. Independently, in some embodiments, at least one composition (ii) is used that has no cyclopropene.

In the practice of the present invention, composition (i) and composition (ii) may be contacted with a plant in a variety of ways. For example, if a composition (iii) is used, it may be a solid, a liquid, a gas, or a mixture thereof.

In some embodiments (herein called "multi-contact" embodiments), a plant is contacted with at least two separate compositions. One of the separate compositions will be a composition (i) (which could, optionally, be a composition (iii)), and at least one other of the separate compositions will be a composition (ii) (which could, independently, be a composition (iii)). In some multi-contact embodiments, a composition (i) of the separate compositions is a gas, and a composition (ii) of the separate compositions is a gas. Independently, in some multi-contact embodiments, a composition (i) of the separate compositions is a gas, and a composition (ii) of the separate compositions is a liquid composition. Independently, in some multi-contact embodiments, a composition (i) of the separate compositions is a liquid composition, and a composition (ii) of the separate compositions is a liquid composition.

It is contemplated that treating a plant may be performed by contacting the plant with at least one composition (i) and with at least one composition (ii) in any order, including simultaneously. In some embodiments, a plant is contacted with at least one composition (i), and the same plant is contacted at a later time with at least one composition (ii). In some embodiments, a plant is contacted with at least one composition (i) and at least one composition (ii) simultaneously. In some embodiments, a plant is contacted with at least one composition (ii), and the same plant is contacted at a later time with at least one composition (i). In some embodiments, a plant is contacted with at least one composition (iii). In any of the above embodiments, further contacts may optionally be performed, before, during, or after those listed, using any one or more of the following: additional composition (i), additional composition (ii), composition (iii), other composition, or any combination thereof.

In some embodiments, a plant is contacted with at least one composition (i) that is a gas. Among such embodiments, it is contemplated that the plant being treated will be surrounded by a normal ambient atmosphere (at approximately 1 atmosphere pressure) to which composition (i) has been added. In some embodiments, the concentration of cyclopropene is 0.1 nl/l (i.e., nanoliter per liter) or higher; or 1 nl/l or higher, or 10 nl/l or higher; or 100 nl/l or higher. Independently, in some embodiments, the concentration of cyclopropene is 3,000 nl/l or lower; or 1,000 nl/l or lower.

In some embodiments, a plant is contacted with at least one composition (ii) that is a gas. Among such embodiments, it is contemplated that the plant being treated will surrounded by a normal ambient atmosphere (at approximately 1 atmosphere pressure) to which composition (ii) has been added. In some embodiments, the concentration of plant growth regulator that is not a cyclopropene is 0.1 nl/l or higher; or 1 nl/l or higher, or 10 nl/l or higher; or 100 nl/l or higher. Independently, in some embodiments, the concentration of cyclopropene is 3,000 nl/l or lower; or 1,000 nl/l or lower.

In some embodiments, the practice of the present invention involves one or more liquid compositions. In some embodiments, liquid compositions are liquid at 25°C. In some embodiments, liquid compositions are liquid at the temperature at which the composition is used to treat plants. Because plants are often treated outside of any buildings, plants may be treated at temperatures ranging from 1°C to 45°C; suitable liquid compositions need not be liquid over that entire range, but suitable liquid compositions are liquid at some temperature from 1°C to 45°C.

A liquid composition may be a single pure substance, or it may contain more than one substance. If a liquid composition contains more than one substance, that liquid composition may be a solution or a dispersion or a combination thereof. If, in the liquid composition, one substance is dispersed in another substance in the form of a dispersion, the dispersion may be of any type, including, for example, a suspension, a latex, an emulsion, a miniemulsion, a microemulsion, or any combination thereof.

In the practice of the present invention, when a composition (i) is used that is a liquid composition, such a composition (i) is known herein as an "LCP." When a composition (ii) is used that is a liquid composition, such a composition (ii) is known herein as an "LPGR." When a composition (iii) is used that is a liquid composition, such a composition (iii) is known herein as an "LBOTH."

In some embodiments of the present invention, the treatment of a plant is performed by contacting the plant with a single liquid composition, which is an LBOTH. In some embodiments (herein called "multiple liquid contact" embodiments), the treatment of a plant includes contacting the plant with more than one liquid composition. In some multiple liquid contact embodiments, at least one of the liquid compositions is an LBOTH, and the remaining liquid composition or compositions may be any one or more of any of the following: an LCP; an LPGR; an LBOTH; a liquid composition that is not an LCP, LPGR, or LBOTH; or any combination thereof. In some multiple liquid contact embodiments, at least one liquid composition is an LCP and at least one liquid composition is an LPGR, and any remaining liquid compositions (if any are used) may be any one or more of any of the following: an LCP; an LPGR; an LBOTH; a liquid composition that is not an LCP, LPGR, or LBOTH; or any combination thereof.

Among embodiments in which at least one LCP is used, the amount of cyclopropene in the LCP may vary widely, depending on the type of composition and the intended method of use. In some embodiments, the amount of cyclopropene, based on the total weight of the LCP, is 4% by weight or less; or 1% by weight or less; or 0.5% by weight or less; or 0.05% by weight or less. Independently, in some embodiments, the amount of cyclopropene, based on the total weight of the LCP, is 0.000001% by weight or more; or 0.00001% by weight or more; or 0.0001% by weight or more; or 0.001 % by weight or more.

Among embodiments of the present invention that use at least one LCP that contains water, the amount of cyclopropene may be characterized as parts per million (i.e., parts by weight of cyclopropene per 1,000,000 parts by weight of water in the LCP, "ppm") or as parts per billion (i.e., parts by weight of cyclopropene per 1,000,000,000 parts by weight of water in the LCP, "ppb"). In some embodiments, the amount of cyclopropene is 1 ppb or more; or 10 ppb or more; or 100 ppb or more. Independently, in some embodiments, the amount of cyclopropene is 10,000 ppm or less; or 1,000 ppm or less.

In some embodiments, at least one LCP is used in which some or all of the cyclopropene is encapsulated in one or more encapsulating agent. Independently, in some embodiments, at least one LBOTH is used in which some or all of the cyclopropene is encapsulated in one or more encapsulating agent.

Among embodiments in which at least one LPGR is used, the amount of plant growth regulator that is not a cyclopropene in the LPGR may vary widely, depending on one or more of the type of composition, the desired plant response, and the intended method of use. In some embodiments, the amount of plant growth regulator that is not a cyclopropene, based on the total weight of the LPGR, is 4% by weight or less; or 1% by weight or less; or 0.5% by weight or less; or 0.05% by weight or less. Independently, in some embodiments, the amount of plant growth regulator that is not a cyclopropene, based on the total weight of the LPGR, is 0.000001 % by weight or more; or 0.00001% by weight or more; or 0.0001% by weight or more; or 0.001% by weight or more.

Among embodiments of the present invention that use at least one LPGR that contains water, in some embodiments, the amount of plant growth regulator that is not a cyclopropene is 1 ppb or more; or 10 ppb or more; or 100 ppb or more. Independently, in some embodiments, the amount of plant growth regulator that is not a cyclopropene is 10,000 ppm or less; or 1,000 ppm or less.

In some embodiments, no composition of the present invention includes one or more metal-complexing agents. In some embodiments, one or more compositions of the present invention includes one or more metal-complexing agents.

Among embodiments in which one or more liquid compositions are used, in some of such embodiments, one or more metal-complexing agents may be included in one or more LCPs, independently in one or more LPGRs, independently in one or more LBOTHs, or in any combination thereof. A metal-complexing agent is a compound that contains one or more electron-donor atoms capable of forming coordinate bonds with a metal atoms. Some metal-complexing agents are chelating agents. As used herein, a "chelating agent" is a compound that contains two or more electron-donor atoms that are capable of forming coordinate bonds with a metal atom, and a single molecule of the chelating agent is capable of forming two or more coordinate bonds with a single metal atom. Suitable chelating agents include, for example, organic and inorganic chelating agents. Among the suitable inorganic chelating agents are, for example, phosphates such as, for example, tetrasodium pyrophosphate, sodium tripolyphosphate, and hexametaphosphoric acid. Among the suitable organic chelating agents are those with macrocyclic structures and non-macrocyclic structures. Among the suitable macrocyclic organic chelating agents are, for example, porphine compounds, cyclic polyethers (also called crown ethers), and macrocyclic compounds with both nitrogen and oxygen atoms.

Some suitable organic chelating agents that have non-macrocyclic structures are, for example, aminocarboxylic acids, 1,3-diketones, hydroxycarboxylic acids, polyamines, aminoalcohols, aromatic heterocyclic bases, phenol, aminophenols, oximes, Shiff bases, sulfur compounds, and mixtures thereof. In some embodiments, the chelating agent includes one or more aminocarboxylic acids, one or more hydroxycarboxylic acids, one or more oximes, or a mixture thereof. Some suitable aminocarboxylic acids include, for example, ethylenediaminetetraacetic acid (EDTA), hydroxyethylethylenediaminetriacetic acid (HEDTA), nitrilotriacetic acid (NTA), N-dihydroxyethylglycine (2-HxG), ethylenebis(hydroxyphenylglycine) (EHPG), and mixtures thereof. Some suitable hydroxycarboxylic acids include, for example, tartaric acid, citric acid, gluconic acid, 5-sulfoslicylic acid, and mixtures thereof. Some suitable oximes include, for example, dimethylglyoxime, salicylaldoxime, and mixtures thereof. In some embodiments, EDTA is used.

Some additional suitable chelating agents are polymeric. Some suitable polymeric chelating agents include, for example, polyethyleneimines, polymethacryloylacetones, poly(acrylic acid), and poly(methacrylic acid). Poly(acrylic acid) is used in some embodiments.

Some suitable metal-complexing agents that are not chelating agents are, for example, alkaline carbonates, such as, for example, sodium carbonate.

Metal-complexing agents may be present in neutral form or in the form of one or more salts. Mixtures of suitable metal-complexing agents are also suitable.

In some embodiments of the present invention, no composition contains water.

In some embodiments, one or more of the compositions of the present invention contains water; in some of such embodiments, the water contains one or more metal ions, such as, for example, iron ions, copper ions, other metal ions, or mixtures thereof. In some embodiments, the water contains 0.1 ppm or more of one or more metal ions.

Among embodiments that use one or more metal-complexing agents, the amount of metal-complexing agent used may vary widely. In some embodiments in which at least one liquid composition is used, the amount of metal-complexing agent in that liquid composition will be adjusted to be sufficient to complex the amount of metal ion that is present or expected to be present in the liquid composition that contains the metal-complexing agent. For example, in some embodiments in which a liquid composition of the present invention is used that includes water that contains some metal ion, if a relatively efficient metal-complexing agent is used (i.e., a metal-complexing agent that will form a complex with all or nearly all the metal ions in the water), the ratio of moles of metal-complexing agent to moles of metal ion will be 0.1 or greater; or 0.2 or greater; or 0.5 or greater; or 0.8 or greater. Among such embodiments that use a relatively efficient metal-complexing agent, the ratio of moles of metal-complexing agent to moles of metal ion will be 2 or less; or 1.5 or less; or 1.1 or less. It is contemplated that, if a less-efficient metal-complexing agent is used, the ratio of moles of metal-complexing agent to moles of metal ion could be increased to compensate for the lower efficiency.

Independently, in some embodiments in which a liquid composition is used, the amount of metal-complexing agent is, based on the total weight of the liquid composition, 25% by weight or less; or 10% by weight or less; or 1% by weight or less. Independently, in some embodiments, the amount of metal-complexing agent is, based on the total weight of the liquid composition, 0.00001% or more; or 0.0001% or more; or 0.01% or more.

Independently, in some embodiments in which a liquid composition that includes water is used, the amount of metal-complexing agent can usefully be characterized by the molar concentration of metal-complexing agent in the water (i.e., moles of metal-complexing agent per liter of water). In some of such liquid compositions, the concentration of metal-complexing agent is 0.00001 mM (i.e., milli-Molar) or greater; or 0.0001 mM or greater; or 0.001 mM or greater; or 0.01 mM or greater; or 0.1 mM or greater. Independently, in some embodiments in which a liquid composition of the present invention includes water, the concentration of metal-complexing agent is 100 mM or less; or 10 mM or less; or 1 mM or less.

In some embodiments of the present invention, one or more adjuvants is also included in one or more compositions. The use of adjuvants is considered optional in the practice of the present invention. Any adjuvant that is used may be included in one or more composition (i) or in one or more composition (ii). Adjuvants may be used alone or in any combination. When more than one adjuvant is used, it is contemplated that any combination of one or more adjuvants may be used. Some suitable adjuvants are surfactants, alcohols, hydrocarbon oils, extenders, pigments, fillers, binders, plasticizers, lubricants, wetting agents, spreading agents, dispersing agents, stickers, adhesives, defoamers, thickeners, transport agents, and emulsifying agents. If more than one composition is used, the presence or absence of any or all adjuvants may be determined independently for each composition. In any composition that contains more than one adjuvant, the combination of adjuvants may be determined for that composition, independently of other compositions.

In some embodiments, at least one composition is used that contains at least one adjuvant selected from alcohols, hydrocarbon oils, alcohols, and mixtures thereof; such a composition may or may not additionally contain one or more surfactant; and such a composition may be a composition (i) or a composition (ii) or a composition (iii).

Among embodiments in which one or more liquid compositions (i.e., one or more of LCP, LPGR, or LBOTH) are used, various embodiments are contemplated that include the use of, for example, any one or more of the following liquid compositions: liquid compositions that contain one or more surfactant but no hydrocarbon oil and no alcohol; liquid compositions that contain one or more hydrocarbon oil but no surfactant and no alcohol; and liquid compositions that contain one or more alcohol but no surfactant and no hydrocarbon oil. In some embodiments, one or more liquid compositions are used that each contain one or more surfactant and one or more hydrocarbon oil; or one or more liquid compositions are used that each contain one or more surfactant and one or more alcohol. In some embodiments, one or more liquid compositions are used that each contain one or more surfactant, one or more hydrocarbon oil, and one or more alcohol.

In some embodiments, at least one LPGR is used that contains no organosilicate compound. Independently, in some embodiments, at least one LBOTH is used that contains no organosilicate compound. Independently, in some embodiments, no organosilicate compound is used.

In some embodiments of the present invention, one or more surfactants are used. Suitable surfactants include, for example, anionic surfactants, cationic surfactants, nonionic surfactants, amphoteric surfactants, and mixtures thereof.

One group of suitable anionic surfactants are the sulfosuccinates, including, for example, alkaline salts of mono- and dialkyl sulfosuccinates. In some embodiments, sodium salts of dialkyl sulfosuccinates are used, including, for example, those with alkyl groups with 4 carbons or more, or 6 carbons or more. In some embodiments, sodium salts of dialkyl sulfosuccinates are used, including, for example, those with alkyl groups with 18 carbons or fewer; or 14 carbons or fewer; or 10 carbons or fewer. One suitable sodium salt of a dialkyl sulfosuccinate is, for example, sodium di-hexyl sulfosuccinate. One other suitable sodium salt of a dialkyl sulfosuccinate is, for example, sodium di-octyl sulfosuccinate.

Another group of suitable anionic surfactants are the sulfates and sulfonates, including, for example, alkaline salts of alkyl sulfates. In some embodiments, sodium salts of alkyl sulfates are used, including, for example, those with alkyl groups with 4 carbons or more, or 6 carbons or more, or 8 carbons or more. In some embodiments, sodium salts of alkyl sulfates are used, including, for example, those with alkyl groups with 18 carbons or fewer; or 14 carbons or fewer; or 10 carbons or fewer. One suitable sodium salt of an alkyl sulfate is, for example, sodium dodecyl sulfate.

Some suitable surfactants are, for example, sodium di-octyl sulfosuccinate, sodium di-hexyl sulfosuccinate, sodium dodecyl sulfate, polyglycerol esters, alcohol ethoxylates, alkylphenol ethoxylates (such as, for example, Triton™ X-100 from Dow), cetyl pyridinium bromide, ethoxylated alkyl amines, alcohol amines (such as, for example, ethanolamines), saponins, and silicone-based surfactants (such as, for example, Silwet™ L-77 surfactant from OSi Specialties).

Mixtures of suitable surfactants are also suitable.

Suitable surfactants have various properties. For example, some are excellent at enabling cyclopropene to remain in contact with certain plants or plant parts; some are readily soluble in the other ingredients of the formulation; some do not cause phytotoxicity in plants or plant parts. Very few surfactants excel in every property, but, when one or more surfactants are used, the practitioner will readily be able to choose a surfactant or mixture of surfactants with the balance of properties most appropriate for the desired use, taking into account, for example, the species desired to be treated and the other ingredients intended to be used in the composition.

Among embodiments in which one or more liquid compositions are used that include one or more surfactants, some liquid compositions contain surfactant in amounts, by weight based on the total weight of the liquid composition, of 0.025% or more; or 0.05% or more; or 0.1 % or more. Independently, some liquid compositions use surfactant in amounts, by weight based on the total weight of the liquid composition, of 75% or less; or 50% or less; or 20% or less; or 5% or less; or 2% or less; 1% or less; or 0.5% or less; or 0.3% or less.

Among embodiments in which one or more liquid compositions are used, in some liquid compositions, one or more hydrocarbon oils are used. Hydrocarbon oils are straight, branched, or cyclic alkane compounds with 6 or more carbon atoms. In some embodiments, hydrocarbon oils are obtained from petroleum distillation and contain a mixture of alkane compounds, along with, in some cases, impurities. In some embodiments, hydrocarbon oils are used that contain 6 or more carbon atoms. In some embodiments, hydrocarbon oils are used that contain 18 or fewer carbon atoms. Some suitable hydrocarbon oils include, for example, hexane, decane, dodecane, hexadecane, diesel oil, refined paraffinic oil (e.g., Ultrafine™ spray oil from Sun Company), and mixtures thereof.

Among liquid compositions that use hydrocarbon oil, some liquid compositions use hydrocarbon oil in amounts, by weight based on the total weight of the liquid composition, of 0.25% or more; or 0.5% or more; or 1% or more. Independently, among liquid compositions that use hydrocarbon oil, some liquid compositions use hydrocarbon oil in amounts, by weight based on the total weight of the liquid composition, of 90% or less; or 50% or less; or 10% or less; or 5% or less; or 4% or less; or 3% or less.

Among embodiments in which one or more liquid compositions are used, in some liquid compositions, one or more alcohols are used. Suitable alcohols include, for example, alkyl alcohols and other alcohols. As used herein, alkyl alcohols are alkyl compounds with one hydroxyl group; the alkyl group may be linear, branched, cyclic, or a combination thereof; the alcohol may be primary, secondary, or tertiary. In some embodiments, alkyl alcohols are used which have alkyl groups with 2 or more carbon atoms. In some embodiments, ethanol, isopropanol, or a mixture thereof is used. In some embodiments, one or more alkyl alcohols are used which have alkyl groups with 20 or fewer carbon atoms; or 10 or fewer carbon atoms; or 6 or fewer carbon atoms; or 3 or fewer carbon atoms.

Among liquid compositions that use alcohol, some liquid compositions use alcohol in amounts, by weight based on the total weight of the liquid composition, of 0.25% or higher; or 0.5% or higher, or 1% or higher. Among liquid compositions that use alcohol, some liquid compositions use alcohol in amounts, by weight based on the total weight of the liquid composition, of 90% or less; or 50% or less; or 10% or less; or 5% or less; or 4% or less; or 3% or less.

The ingredients of the present invention may be admixed by any means, in any order.

In the practice of the present invention, treatment of a plant may be conducted by any method that allows the composition or compositions of the present invention to contact the plant Among embodiments in which one or more liquid compositions are used, some examples of methods of contact are, for example, spraying, foaming, fogging, pouring, brushing, dipping, similar methods, and combinations thereof. In some embodiments, spraying or dipping or both is used. In some embodiments, spraying is used.

After a plant is contacted with one or more compositions of the present invention, any ingredients that interact with the plant may begin that interaction right away, or such ingredients, independently of each other, may interact with the plant at a later time. For example, the liquid composition may form a release coating on all or part of the plant, and one or more ingredients may become available, over time, to interact with the plant.

In some embodiments, a composition of the present invention is used to treat one or more plants. It is contemplated that, in performing the treatment, the composition of the present invention may be contacted with the entire plant or may be contacted with one or more plant parts. Plant parts include any part of a plant, including, for example, flowers, buds, blooms, seeds, cuttings, roots, bulbs, fruits, vegetables, leaves, and combinations thereof.

Some plants are grown for the purpose of removing one or more plant parts, when such parts are considered a useful product. Removal of such useful plant parts is known as harvesting. In some embodiments of the present invention, plants that produce useful plant parts are treated with composition or compositions of the present invention prior to the harvesting of the useful plant parts. In such embodiments, each composition that is used may, independently of any other compositions that may be used, be brought into contact with all of or with some portion of the plant. If a composition is brought into contact with a portion of the plant, that portion may or may not include the useful plant part intended to be harvested.

In some embodiments, a plant is treated while it is rooted in soil. In some embodiments, a plant is treated while it is alive. In some embodiments, at least one treatment is performed on a plant after germination but before any useful plant parts are harvested (such treatment is herein called "pre-harvest" treatment). In some pre-harvest treatments, a plant is treated at least once after it blooms (additional treatment before the plant blooms may or may not be performed). Independently, in some pre-harvest treatments of a plant that produces fruits or vegetables, the plant is treated at least once after the fruit or vegetable sets (additional treatment before the fruit or vegetable sets may or may not be performed).

Suitable treatments may be performed on a plant or plants that are planted in a field, in a garden, in a building (such as, for example, a greenhouse), or in another location. Suitable treatments may be performed on a plant or plants that are planted in open ground, in one or more containers (such as, for example, a pot, planter, or vase), in confined or raised beds, or in other places.

In some embodiments, the present invention involves treatment of a citrus plant (i.e., any plant in the genus *Citrus).* Citrus plants include, for example, plants that produce oranges, grapefruits, tangerines, lemons, limes, variations thereof, and hybrids thereof.

In some embodiments, the present invention involves treatment of any non-citrus plant (i.e., any plant that is not in the genus *Citrus).* Some examples of suitable non-citrus plants include, for example, plants that yield useful plant parts selected from one or more of the following categories: vegetables, non-citrus fruits, edible (or otherwise useful) leaves, edible (or otherwise useful) sap, flowers, roots, seeds, grains, nuts, useful fibers, or any combination thereof. It is recognized that certain useful plant parts are sometimes labeled as belonging to more than one category. For example, some plant parts commonly labeled as "vegetables" are also sometimes labeled as "fruits." It is also recognized that, within each of the above-listed categories, some commonly-used terms for sub-categories also overlap with each other. It is contemplated herein that any group of plants that is disclosed as suitable will be suitable for the practice of the present invention, whether or not that disclosed group of plants overlaps with any other disclosed group of suitable plants.

Among the suitable non-citrus plants that yield fruits, some examples are those that yield non-citrus fleshy fruits and those that yield dry fruits. Among the suitable non-citrus plants that yield fleshy fruits, some examples are those that yield drupe fruits (i.e., fleshy fruits with a stony inner layer surrounding one or more seeds), including, for example, cherry, coffee, peach, coconut, almond, and other fleshy drupe fruits. Among the suitable non-citrus plants that yield fleshy fruits, some further examples are those that yield non-citrus berry fruits (i.e., fleshy fruits that have no stony layer), including, for example, grape, tomato, watermelon, cucumber, pumpkin, squash, and other non-citrus berry fruits. Among the suitable non-citrus plants that yield fleshy fruits, some additional examples are those that yield pome fruits (i.e., fleshy fruits with a cartilaginous core surrounded by a fleshy accessory layer), including, for example, apple, pear, quince, and other pome fruits.

Among the suitable non-citrus plants that yield dry fruits, some examples are those that yield dehiscent fruits (i.e., dry fruits that open naturally to shed seeds), including, for example, legumes (such as, for example, green beans, navy beans, peas, redbuds, honey locusts, black locusts, and other legumes), siliques (such as, for example, cabbage), and capsules (such as, for example, poppies).

Among the suitable non-citrus plants that yield dry fruits, some further examples are those that yield indehiscent fruits (i.e., dry fruits that do not open naturally to shed seeds). Among the suitable non-citrus plants that yield indehiscent fruits, some examples are achenes (small, one-seeded dry fruits, with seed coat separate from the fruit), including, for example, strawberries and other achenes. Among the suitable non-citrus plants that yield indehiscent fruits, some further examples are caryopsis fruits (small, one-seeded dry fruits with the seed coat fused to the fruit wall), including, for example, rice, wheat, corn, oats, barley, and other grains. Among the suitable non-citrus plants that yield indehiscent fruits, some more additional examples are cypselas (small, one-seeded dry fruits with an accessory layer on its fruit), including, for example, sunflowers and other members of the daisy family. Among the suitable non-citrus plants that yield indehiscent fruits, some still more examples are samara (small, one-seeded dry fruits with a large wing-like outgrowth), including, for example, ash, elm, and maple. Among the suitable non-citrus plants that yield indehiscent fruits, some yet further examples are nuts (dry fruits with a leathery ovary wall that is partially or fully surrounded by leafy appendages), including, for example, acorn, filbert, and other nuts.

Among the suitable non-citrus plants that yield vegetables, some examples are those that yield aquatic food plants, such as, for example, watercress, rice, water chestnuts, and other aquatic food plants. Further among the suitable non-citrus plants that yield vegetables, some examples are those that yield beans, such as, for example, legumes, garbanzo beans, soybeans, mung beans, runner beans, pole beans, snap beans, and other beans. Also among the suitable non-citrus plants that yield vegetables, some examples are those that yield bulb crops such as, for example, garlic, onion, leek, rakkyo, shallot, and other bulb crops. Additionally among the suitable non-citrus plants that yield vegetables, some examples are those that yield cole crops, including, for example, broccoli, brussels sprouts, cabbage, cauliflower, bok choy, collards, kale, mustard, radish, rutabaga, rape, turnip, and other cole crops. Still further among the suitable non-citrus plants that yield vegetables, some examples are those that yield curcurbits, including, for example, cantaloupe, cucumber, gherkin, gourds, casaba melon, honeydew melon, pumpkin, squash, watermelon, zucchini, and other curcurbits. Also additionally among the suitable non-citrus plants that yield vegetables, some examples are those that yield edible tubers and roots, including, for example, cushcush, ginger, jicama, parsnip, potato, radish, rutabaga, sweet potato, turnip, yam, and other edible tubers and roots. Yet further among the suitable non-citrus plants that yield vegetables, some examples are those that yield leafy vegetables, such as, for example, cilantro, lettuce, endive, escarole, spinach, dandelion, and other leafy vegetables.

Also contemplated as suitable non-citrus plants are those that yield non-edible useful plant parts, such as, for example, tobacco, cotton, flax, and plants that yield non-edible useful bulbs. Also contemplated as suitable non-citrus plants are those from which useful materials can be extracted; such useful materials may be, for example, raw materials for manufacturing, medicinally useful materials, and materials useful for other purposes.

Further contemplated as suitable non-citrus plants are those that yield plant parts that are useful for their beauty and/or ornamental properties. Such ornamental plant parts include, for example, flowers and other ornamental plant parts such as, for example, ornamental leaves. In some embodiments, an entire ornamental plant is considered to be the useful plant part.

In some embodiments, the practice of the present invention is limited to the treatment of non-citrus plants.

In some embodiments, plants are treated that are not members of the genus *Nicotiana*.

In some embodiments of the present invention, a group of plants is treated simultaneously or sequentially. One characteristic of such a group of plants is the crop yield, which is defined as the weight (herein called "crop weight") of useful plant parts collected from a defined group of plants. In one useful definition of the crop yield, the defined group of plants is the group that occupies a certain area of ground (this definition is often used when plants are growing in a contiguous group in a large field). In another useful definition of the crop yield, the defined group of plants is a specific number of individually identified plants (this definition may be used for any group of plants, including, for example, plants in fields, in pots, in greenhouses, or any combination thereof).

It is contemplated that the collected plant parts that contribute to the crop weight are those plant parts that meet the minimum quality criteria that are appropriate for that type of plant part. That is, when plant parts are harvested from certain plants, the crop weight is the weight of the plant parts of acceptable quality that are harvested from those plants. Acceptable quality may be determined by any of the common criteria used by persons who harvest or handle the plant part of interest. Such criteria of acceptable quality of a plant part may be, for example, one or more of size, weight, firmness, resistance to bruising, flavor, sugar/starch balance, color, beauty, other quality criteria, or any combination thereof. Also contemplated as a criterion of quality, either alone or in combination with any of the foregoing criteria, is the time over which the plant part maintains its quality (as judged by any of the forgoing criteria).

The plant parts that contribute to the crop weight is known herein as a "crop." That is, a group of plants is specified, and the plant parts are harvested, and the collection of harvested plant parts that meet the appropriate minimum quality criteria is known as the crop from that specified group of plants. In some embodiments, a suitable group of plants is determined by identifying certain individual plants; for example, a group of 50 individual plants may be identified, or a group of 100 individual plants, or a group of 500 individual plants. In some embodiments, a suitable group of plants is determined by identifying an area of a planted field; for example, an area of 0.01 hectare may be identified, or 0.1 hectare, or 1 hectare, or 10 hectare, or 100 hectare.

In some embodiments of the present invention, treatment of a group of plants with the methods of the present invention will increase the crop yield of that group of plants, compared to the crop yield that would have been obtained from that group of plants if it had not been treated with the methods of the present invention. The increase in crop yield may be obtained in any of a wide variety of ways. For example, one way an increase in crop yield may be obtained is that each plant may produce a greater number of useful plant parts. As another example, one way an increase in crop yield may be obtained is that each useful plant part may have higher weight. As a third example, crop yield may increase when a larger number of potentially useful plant parts meets the minimum criteria for acceptable quality. Other ways of increasing the crop yield may also result from the practice of the present invention. Also contemplated are increases in crop yield that happen by any combination of ways.

Another contemplated benefit of practicing some embodiments of the present invention is that the general quality of the crop may be improved. That is, a crop produced by methods of the present invention may have a general or average level of quality higher than comparable crops produced without the methods of the present invention, as judged by the quality criteria appropriate for that crop. In some cases, such higher-quality crops may command higher prices when sold.

Various benefits may result from the practice of the present invention. The beneficial effects on the treated plants include, for example, one or more of the following effects (some of which have been discussed herein above and some of which are different from those discussed herein above): increased biomass volume, increased biomass quality, increased fruit, increased fruit size (when desired), decreased fruit size (when desired), harvest timing (advanced or delayed, as desired), decreased cell turgor, decreased russetting, lowered stress response, lowered wounding response, increased shelf life of harvested plant parts, apical dominace, abscission prevention, senescence prevention, yellowing prevention, improved vigor during growth, improved vigor during transit, improved vigor during transplant, and combinations thereof.

It is to be understood that for purposes of the present specification and claims that the range and ratio limits recited herein can be combined. For example, if ranges of 60 to 120 and 80 to 110 are recited for a particular parameter, then the ranges of 60 to 110 and 80 to 120 are also contemplated. For another example, if minimum values for a particular parameter of 1, 2, and 3 are recited, and if maximum values of 4 and 5 are recited for that parameter, then it is also understood that the following ranges are all contemplated: 1 to 4, 1 to 5, 2 to 4, 2 to 5, 3 to 4, and 3 to 5.

### EXAMPLES

In the Examples below, the following ingredients were used:
- Complex C1 =: SmartFresh™ powder containing 3.3% 1-MCP by weight, from Rohm and Haas Co. (1-MCP/α-CD complex)
- EDTA =: ethylenediaminetetraacetic acid
- Adjuvant 1 =: Ultrafine™ spray oil from Sun Company
- Adjuvant 2 =: alkyl sulfosuccinate surfactant

### Example 1

The following three formulations were made:

**Formulation A (12 ppm 1-MCP):**

| | |
|---|---|
| Water | 1000 g |
| Complex C1 | 0.36 g |
| EDTA | 0.05 g |
| Adjuvant 1 | 8.5 g |
| Adjuvant 2 | 0.5 g |

**Formulation B (675 ppm ethephon):**

| | |
|---|---|
| Water | 1000 g |
| ethephon | 0.68 g |
| EDTA | 0.05 g |
| Adjuvant 1 | 8.5 g |
| Adjuvant 2 | 0.5 g |

**Formulation C (12 ppm 1-MCP and 675 ppm ethephon):**

| | |
|---|---|
| Water | 1000 g |
| Complex C1 | 0.36 g |
| ethephon | 0.68 g |
| EDTA | 0.05 g |
| Adjuvant 1 | 8.5 g |
| Adjuvant 2 | 0.5 g |

Silver Queen corn was planted in a field and sprayed to run off once at one week after tassel emergence. After spraying, the corn was allowed to develop normally, and the corn cobs were harvested and weighed. A "treatment" was a group of contiguous corn stalks that were sprayed with a particular formulation. The number of corn stalks in each treatment was similar and averaged 55 The formulations used were plain water and Formulations A, B, and C. For each formulation, the result reported is the total harvested weight for the treatments made with that formulation. The results were as follows:

| Formulation | Weight of Corn Cobs, kg (lbs) |
|---|---|
| water | 8.732 (19.25) |
| B | 6.464 (14.25) |
| A | 10.77 (23.75) |
| C | 14.63 (32.25) |

The treatments using Formulation C had much better crop yield than any of the other treatments.

### Example 2

Mirai sweet corn was planted in a field and treated as in Example 1. The number of corn stalks in each treatment was similar and averaged 53 The results were as follows:

| Formulation | Weight of Corn Cobs, kg (lbs) |
|---|---|
| water | 10.77 (23.75) |
| B | 10.55 (23.25) |
| A | 13.27 (29.25) |
| C | 14.40 (31.75) |

The treatments using Formulation C had much better crop yield than any of the other treatments.

### Example 3

Mountain Fresh tomatoes were grown in a green house and sprayed once to run off at the point of first fruit set, using Formulation A and Formulation B as defined in Example 1. Plants were subjected to one of the following treatments:
- a.: sprayed once with water
- b.: sprayed once with Formulation A
- c.: sprayed once with Formulation B
- d.: sprayed once with Formulation A, then sprayed once, one day later, with Formulation B.

The results were as follows:

| Formulation | Weight of Tomatoes, kg (lbs) |
|---|---|
| water | 22.9 (50.5) |
| B | 16.4 (36.2) |
| A | 25.6 (56.4) |
| A then B one day later | 26.4 (58.3) |

Treating tomatoes with both of Formulations A and B gave better crop yield than any of the other treatments.

## Claims

1. A method for treating a non-citrus plant comprising contacting said non-citrus plant with at least one composition (i) comprising at least one cyclopropene and contacting said non-citrus plant with at least one composition (ii) comprising at least one plant growth regulator that is not a cyclopropene.

2. A crop harvested from a group of plants treated by the method of claim 1.

3. The method of claim 1, wherein said plant growth regulator that is not a cyclopropene comprises at least one compound selected from the group consisting of ethylene, non-cyclopropene ethylene release agents, and non-cyclopropene compounds with high ethylene activity.

4. The method of claim 1, wherein said plant growth regulator that is not a cyclopropene comprises at least one compound selected from the group consisting of non-cyclopropene compounds that inhibit ethylene synthesis and non-cyclopropene compounds that inhibit ethylene receptor site action, and compounds that inhibit ethylene synthesis and ethylene receptor site action.

5. The method of claim 1, wherein said plant growth regulator that is not a cyclopropene comprises at least one non-cyclopropene compound with cytokinin activity.

6. The method of claim 1, wherein said plant growth regulator that is not a cyclopropene comprises at least one non-cyclopropene auxin.

7. The method of claim 1, wherein said plant growth regulator that is not a cyclopropene comprises at least one gibberillin.

8. The method of claim 1, wherein said plant growth regulator that is not a cyclopropene comprises at least one compound selected from the group consisting of cofactors of IAA oxidase and inhibitors of IAA oxidase.

9. The method of claim 1, wherein said plant growth regulator that is not a cyclopropene comprises at least one secondary growth inhibitor.

10. The method of claim 1, wherein said plant growth regulator that is not a cyclopropene comprises at least one natural growth hormone.

11. A liquid composition suitable for treating plants comprising at least one cyclopropene, at least one plant growth regulator that is not a cyclopropene, and one or more further ingredients selected from the group consisting of metal complexing agents, hydrocarbon oils, and alcohols.

12. A method for treating a plant comprising contacting said plant with at least one composition (i) comprising at least one cyclopropene and contacting said plant with at least one composition (iv) comprising at least one plant growth regulator that is not a cyclopropene and is not an abscission agent.

13. A liquid composition suitable for treating plants comprising at least one cyclopropene, at least one plant growth regulator that is not a cyclopropene and that is not an abscission agent, and one or more further ingredients selected from the group consisting of metal complexing agents, surfactants, hydrocarbon oils, and alcohols.
